# EUROPEAN PATENT SPECIFICATION

(11) **EP 2 456 164 B1**
(45) Date of publication and mention of the grant of the patent: **19.10.2016**
(21) Application number: 11173089.1
(22) Date of filing: 07.07.2011
(51) Int. Cl.: H04L 29/06

(54) **Server, access device and method for implementing single-sign-on**
Server, Zugangsgerät und Verfahren zur Durchführung von single-sign-on
Serveur, dispositif d'accès et méthode de mise en oeuvre de 'single-sign-on'

(30) Priority: 22.11.2010 KR 20100116406
(43) Date of publication of application: 23.05.2012
(73) Proprietor: Samsung Electronics Co., Ltd., Suwon-si, Gyeonggi-do, 443-742 (KR)
(72) Inventor: Choi, Jong-il, Seoul (KR); Lee, Sang-kwon, Gyeonggi-do (KR); Kang, Chun-un, Seoul (KR); Han, Se-jun, Daejeon (KR); Cho, Yun-jeong, Gyeonggi-do (KR)
(74) Representative: Hewett, Jonathan Michael Richard

(56) References cited:
- EP-A1- 1 806 902
- US-A1- 2005 091 539
- US-A1- 2008 141 313

## Description

The present invention relates to a server, a device accessing the server and a control method thereof, and more particularly, to a server for single sign on, a device accessing the server and a control method thereof.

Single sign on (SSO) refers to a method for automatically accessing and using multiple web sites by a single log-in to one of web sites. In general, multiple systems or web sites manage their user information, respectively. The SSO was developed as large corporations operating multiple web sites or Internet-related companies needed to integrate and manage their members.

With the SSO, any individual may record his/her ID, password, and personal information such as name and contact information, just once instead of doing for all of web sites. Meanwhile, companies may implement an integrated management of their members and maximize marketing effects.

A widespread use of IPTVs enables viewers to access web sites via the IPTV and to use various services. In that respect, there is a rising demand for embodying the SSO and for sharing account information of a particular web site between different devices for enhanced user convenience.

D1 describes an authoritative server and a method to allow the user of a first device to use a video subscription service on a second device.

Accordingly, one or more exemplary embodiments of the present invention provide a server for single sign on, a device accessing the server and a control method thereof which shares account information for a content provider.

Another exemplary embodiment provides a server for single sign on, a device accessing the server and a control method thereof which shares account information for a content provider by using a storage medium.

Still another exemplary embodiment provides a server for single sign on, a device accessing the server and a control method thereof which registers device information with a server more easily.

The foregoing and/or other aspects may be achieved by providing a server for single sign on according to claim 1.

The foregoing and/or other aspects may be achieved by providing a device which accesses a server for single sign on according to claim 5.

The foregoing and/or other aspects may be achieved by providing a control method of a server for single sign on according to claim 7.

The foregoing and/or other aspects may be achieved by providing a control method of a device which accesses a server for single sign on according to claim 8.

The above and/or other aspects will become apparent and more readily appreciated from the following description of the exemplary embodiments, taken in conjunction with the accompanying drawings, in which:
FIG. 1 is a control block diagram of a server and devices according to an exemplary embodiment;
FIG. 2 is a control flowchart of a control method of the server and the devices in FIG. 1;
FIG. 3 is a control block diagram of a server and devices according to another exemplary embodiment;
FIG. 4 is a control flowchart of a control method of the server and the devices in FIG. 3;
FIG. 5 is a control block diagram of a server and devices according to another exemplary embodiment;
FIG. 6 is a control flowchart of a control method of the server and the devices in FIG. 5;
FIG. 7 is a control flowchart of a registration method of the server and the devices;
FIG. 8 illustrates a user interface (UI) which generates a device identification content in FIG. 7; and
FIG. 9 illustrates a UI which explains searching an identification content in FIG. 7.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein.

Descriptions of well-known parts are omitted for clarity, and like reference numerals refer to like elements throughout.

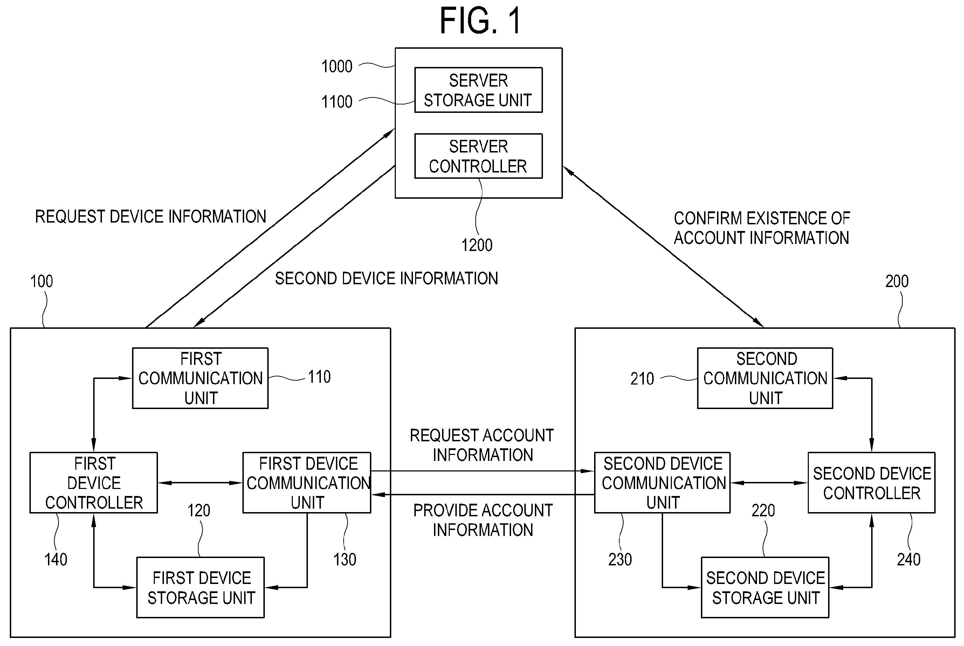

FIG. 1 is a control block diagram of a server and devices according to an exemplary embodiment.

As shown therein, a server 1000 includes a server storage unit 1100 and a server controller 1200. A first device 100 includes a first communication unit 110, a first device storage unit 120, a first device communication unit 130 and a first device controller 140. A second device 200 includes a second communication unit 210, a second device storage unit 220, a second device communication unit 230 and a second device controller 240.

The server 1000 has information of the first and second devices 100 and 200 registered therewith. The server 1000 provides various information to the first and second devices 100 and 200 for single sign on (SSO) of the first and second devices 100 and 200. The server 1000 may include a server which is operated by a manufacturer of the first and second devices 100 and 200.

The first and second devices 100 and 200 may include an IPTV which is provided with various services through an Internet protocol, or a personal terminal such as a personal computer (PC), a mobile phone, a smart phone, a portable multimedia player (PMP), a netbook, a laptop computer, and an e-book. The first and second devices 100 and 200 may include any device which receives, displays and executes contents from various content providers by accessing the Internet.

If a user accesses the server 1000 through the first and second devices 100 and 200 for generation and registration of a user account, user information such as a user ID and device inherent information such as a model number, a model code and a manufacturing number of the device are provided to the server 1000. The server 1000 may provide a user with various services through the devices 100 and 200 based on the information of user and device. The server 1000 may store individual account information (ID and password) for each user. That is, if the first and second devices 100 and 200 include a TV which is used in common, each user may generate and register user information with the server 1000, and the server 1000 may provide services for each user.

If a user accesses again the server 1000 after registering user information and device information with the server 1000, the server 1000 may perform a user authentication process based on the registered user information and device information. If the server 1000 authenticates a user and the device as valid, the server 1000 may issue an authentication token to a user. The authentication token may be set to be effective for a predetermined particular period such as one day or two days and to become null and void after the lapse of the period.

If the server 1000 provides a plurality of services, e.g., mailing service, social network service (SNS), blogging service, media service, a user does not need to log in multiple times to use the plurality of services. Upon the issuance of the authentication token, if a user accesses a particular service, the validity of the authentication token issued by the server 1000 is checked. Once the validity of the authentication token is confirmed, a user may use the service provided by the server 1000 without any additional log-in for using the service. The server 1000 provides the SSO by issuing the authentication token, and a user may use the services conveniently without a plurality of log-ins. The server storage unit 1100 stores the registered user information and device information and the authentication token issued for a user. The server controller 1200 may identify what authentication token has been issued for which user by using the information stored in the server storage unit 1100.

The server controller 1200 communicates with the first and second devices 100 and 200, and controls the server 1000 to store in the server storage unit 1100 the registered user information and device information, and issues the authentication token whenever a user logs in. Upon receiving a request for account information (ID and password) for a content provider from the first device 100, the server controller 1200 identifies the second device 200 which is accessed by a user who is identical to a user of the first device 100 and which stores the account information.

As described above, the first and second devices 100 and 200 include electronic devices which access various content providers through the Internet. For purposes of convenience, it is assumed that the first device 100 does not store the account information of the content provider and the second device 200 stores the account information of the content provider requested by the first device 100. Even if used by the same user, the first device 100 does not store the account information for the content provider unlike the second device 200, and a user should register the account information to access the content provider through the first device 100. For example, even if a TV located in a study room has account information for Facebook or Twitter or other SNS web sites stored therein, a user may not use such account information through a TV located in a living room.

If the first and second devices 100 and 200 provide the SSO and a user logs in to the server 1000 through the second device 200, he/she may automatically log in to other content providers. However, since the first device 100 does not have the account information for the content provider stored therein, a user may not automatically log in to the content provider through the first device 100.

To solve the foregoing problem, the server controller 1200 identifies whether a logged in device is used by the same user as that of another logged in device which stores the account information requested by the user among the logged-in devices and informs the user of the identified device.

The first and second communication units 110 and 210 are connected to the server 1000 by a control of the first and second controllers 140 and 240, provide the server 1000 with the user information and device information and receive data from the server 1000.

The first device storage unit 120 and the second device storage unit 220 store user information, device information and authentication token received from the server 1000, respectively. As described above, the authentication token is transmitted to the server 1000 and authenticated when a user authentication is required. The second device 200 stores account information of a user. The user information and account information are information for an individual, and stored for each user when a plurality of users use a single device. For example, if a dad accesses the server 1000, user information on the dad is stored. If a dad accesses the content provider, account information for the dad is stored individually. Each user should register his/her information with the server 1000 through the devices 100 and 200 and access the content provider and generate account information.

The first device communication unit 130 communicates with the second device communication unit 230 through a network. The first device communication unit 130 and the second device communication unit 230 may include a communication module corresponding to Bluetooth, Wi-Fi, Zigbee, infrared (IR) communication, radio frequency (RF) communication and other various wired/wireless communications.

Middleware which supports a home networking to share music, photos, video and other digital contents stored in electronic devices such as computers, home appliances, portable terminals includes Universal Plug and Play (UPnP), Home Audio Video Interoperability (Havi), Jini, Video Electronics Standards Association (VESA), Digital Living Network Alliance (DLNA) or the like. The first and second devices 100 and 200 according to the present exemplary embodiment may communicate by the DLNA set on the basis of open standards, i.e., the industrial standards such as HTTP, UPnP, and Wi-Fi. The DLNA focuses on sharing all of contents provided by TV, VCR, digital cameras, and audio systems, and supports acquisition, transmission and management of digital media contents (e.g., photos, music and video) from personal devices such as mobile devices and personal computers. The first and second devices 100 and 200 may transmit and receive the account information for the content provider through a DLNA-based networking.

The first device controller 140 controls the first device communication unit 130 to request the account information for a content provider from the server 1000 device information, receives from the server 1000 the device information of the second device 200 which is accessed by the same user as a current user and which stores the account information.

The second device controller 240 accesses the server 1000, responds to the request for the confirmation of the account information for the content provider, and transmits to the first device 100 the account information for the content provider through the second device communication unit 230 in response to the request of the first device 100.

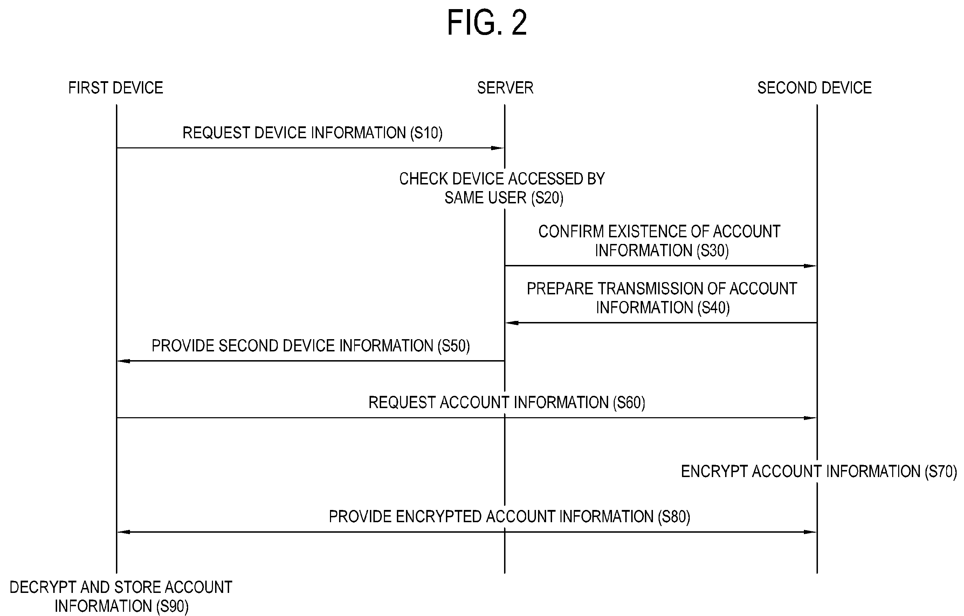

FIG. 2 is a control flowchart of a control method of the server 1000 and the devices 100 and 200 in FIG. 1. The method of sharing the account information by the first and second devices 100 and 200 will be described with reference to FIG. 2.

First, the first and second devices 100 and 200 are logged in the server 1000, respectively.

The first device 100 according to the present exemplary embodiment requests device information, of the second device 200 which stores the account information for the content provider, from the server 1000 (S10).

The server 1000 checks whether the device is accessed by the same user as the current user of the first device 100 corresponding to the request signal received from the first device 100 (S20). As the server storage unit 1100 stores information on what authentication token is issued for what user, the server controller 1200 may identify the identity of the log-in user by using the server storage unit 1100.

Upon identifying that the device is accessed by the same user, the server 1000 identifies whether the account information for the content provider is stored in the device, i.e., the second device 200 (S30).

The device storing the account information, i.e., the second device 200 transmits to the server 1000 the signal informing that the second device 200 is ready to transmit the account information for the content provider in response to the request of the server 1000 (S40).

Based on the signal received from the second device 200, the server 1000 provides the first device 100 with the information of the second device 200 which stores the account information (S50). The information on the device may include communication information of the second device 200 which may communicate with the first device 100 or graphic user interface (GUI) information which is used to identify a device storing account information among a plurality of devices logged in by the same user.

The first device 100 requests the account information from the second device 200 which stores the account information, through the first device communication unit 130 (S60).

The second device 200 encrypts the account information (S70), and transmits the encrypted account information to the first device 100 through the second device communication unit 230 (S80).

The first device 100 decrypts the account information and stores the decrypted account information in the first device storage unit 120 (S90). The first device 100 which stores the account information for the content provider may provide the SSO which enables the access to the content provider by a single log-in.

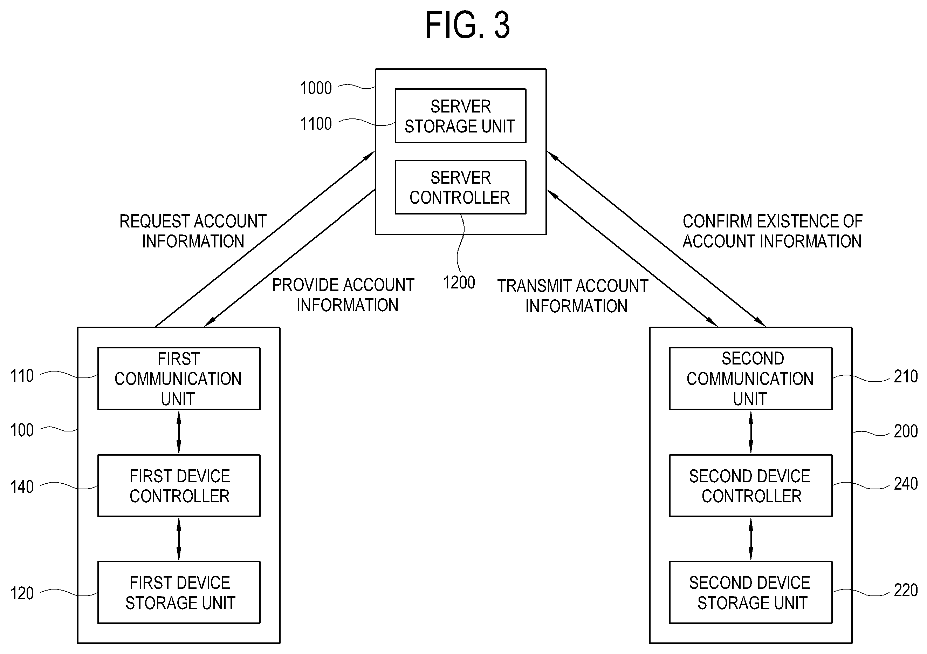

FIG. 3 is a control block diagram of a server and devices according to another exemplary embodiment.

First and second devices 100 and 200 do not include the first device communication unit 130 and the second device communication unit 230 unlike in FIG. 1, and other elements according to the exemplary embodiment are substantially the same as those in FIG. 1.

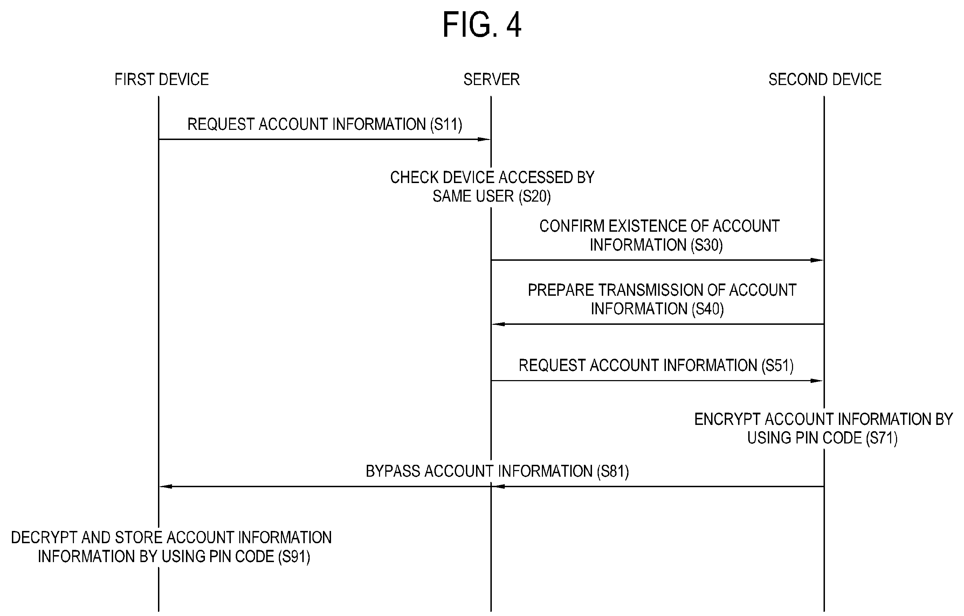

The first device 100 receives account information for a content provider through the server 1000 instead of through a communication with the second device 200. FIG. 4 is a control flowchart of a control method of the server and the devices in FIG. 3.

The first device 100 requests the account information from the server 1000 to acquire the account information for the content provider (S11).

The server 1000 checks that the device accessed by the same user as a current user of the first device 100 in response to the request signal from the first device 100 (S20), and identifies whether the account information for the content provider is stored in the device which is identified as the device accessed by the same user (S30). The second device 200 transmits to the server 1000 the signal informing that it is ready to transmit the account information for the content provider in response to the request of the server 1000 (S40).

Upon the server 1000 receiving the signal informing that the second device 200 is ready to transmit the account information, the server 1000 requests the account information to the second device 200 (S51).

The second device 200 encrypts the account information together with a PIN code (S71).

Then, the second device 200 transmits the encrypted account information to the server 1000, and the account information transmitted to the server 1000 bypasses the server 1000 and is transmitted to the first device 100 (S81). That is, the server 1000 acts as a transmission medium which receives the account information from the second device 200 and transmits the account information to the first device 100. The account information is not stored in the server 1000. If the encrypted account information is transmitted, the server 1000 may once again identify whether the user of the first device 100 is the same as the user of the second device 200.

The first device 100 decrypts the encrypted accounted information by using the PIN code input by a user, and stores the account information therein (S91). If a user is identical, he/she may input the same PIN code in the first device 100 as that in the second device 200. If the valid period for the authentication token, which is issued when the first and second devices 100 and 200 are logged in, elapses, the account information may not be transmitted even if the PIN code is valid.

Upon receiving the request for information of the second device 200 or the account information from the first device 100, the server controller 1200 may notify the first device 100 of a failure to search the second device 200 if the second device 200, which is accessed by the same user as the user of the first device 100 and stores the account information, is not searched. In this case, the server controller 1200 may transmit to the second device 200 a message informing that the first device 100 has requested the account information if the second device 200 is logged in.

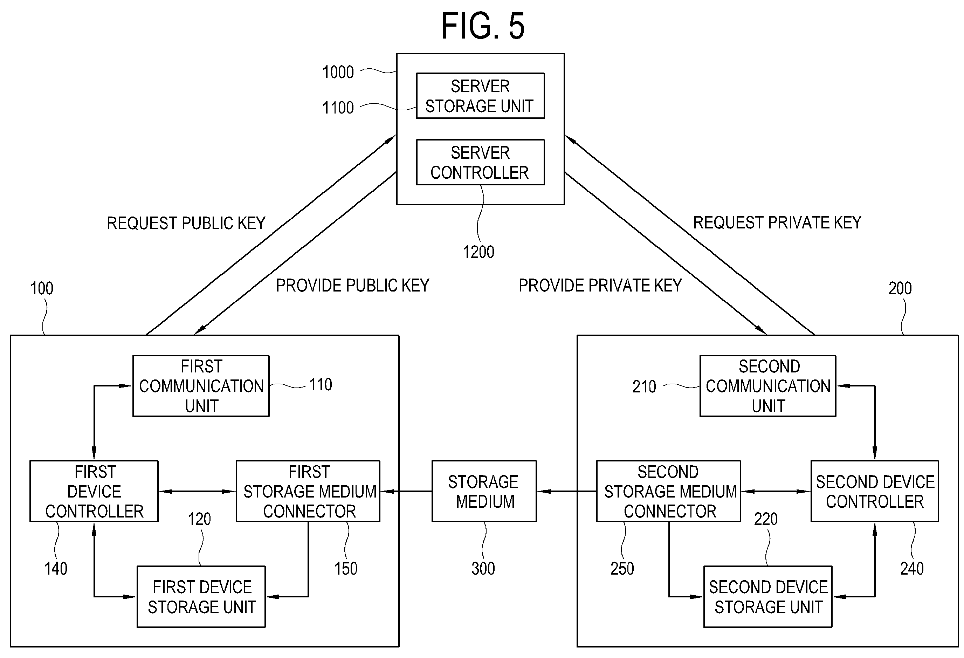

FIG. 5 is a control block diagram of a server and devices according to another exemplary embodiment.

The first and second devices 100 and 200 according to the present exemplary embodiment include a first storage medium connector 150 and a second storage medium connector 250 which are interfaces to connect an external storage unit in addition to the first device storage unit 120 and the second device storage unit 220. The first and second storage medium connectors 150 and 250 may include a connection port to connect a portable storage medium such as a universal serial bus (USB) device or a wired/wireless network connector to connect an external device including a storage unit.

A storage medium 300 which is connected to the first and second storage medium connectors 150 and 250 acts as a medium transmitting the account information.

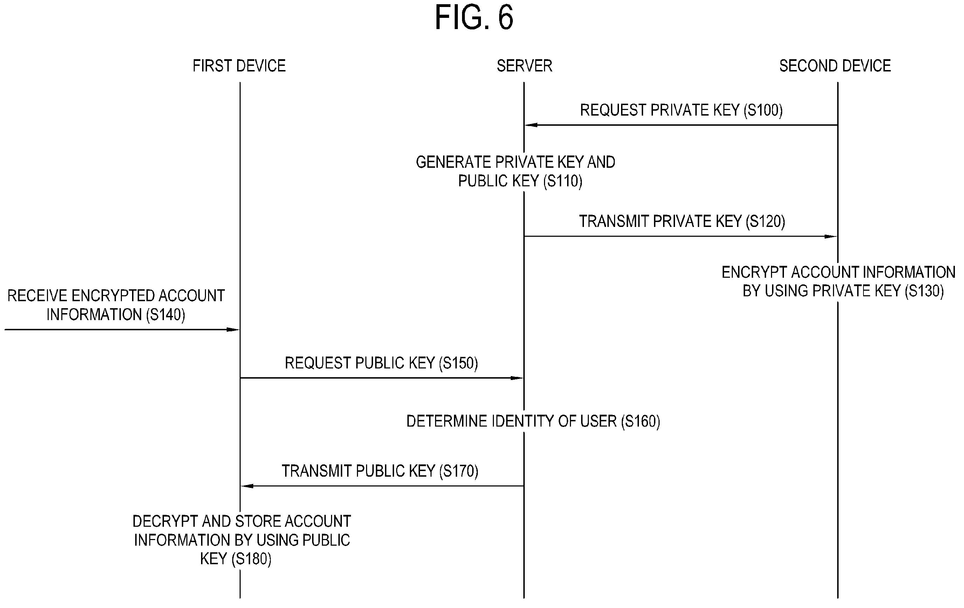

FIG. 6 is a control flowchart of a control method of the server and the devices in FIG. 5.

The second device 200 which stores the account information for the content provider requests a private key to the server 1000 (S100).

The server 1000 generates the private key and a public key corresponding to the private key (S110), and transmits the generated private key to the second device 200 (S120).

The second device 200 encrypts the account information by using the private key received from the server 1000 (S130).

The encrypted account information is stored in the storage medium 300, and the portable storage medium 300 may be connected to the first storage medium connector 150 of the first device 100.

The first device 100 receives the encrypted account information by using the storage medium 300 (S140), and requests the public key to the server 1000 to decrypt the account information (S150).

The server 1000 identifies whether a user of the first device 100 is the same as a user of the second device 200, i.e., whether a user of the second device which provides the private key requests the public key based on the user information (S160).

If it is determined that a user of the first device 100 is the same as a user of the second device 200, the server 1000 provides the first device 100 with the public key (S170).

The first device 100 decrypts the account information by using the public key received from the server 1000, and stores the decrypted account information in the first device storage unit 120 (S180).

The first device 100 should request the public key before the valid period for the authentication token issued when the first device 100 is logged in elapses.

According to another exemplary embodiment, the server 1000 may store account information for a content provider received from the second device 200 for each user. Upon receiving the request signal for the account information from the first device 100, the server 1000 may authenticate the first and second devices 100 and 200, and transmit the stored account information to the first device 100. Otherwise, upon receiving the request signal for the account information from the first device 100, the server 1000 may search the second device 200 which is logged in by the same user and stores the account information requested by the first device 100, and then request and receive the account information. If the account information is stored in the server 1000, the account information may be provided to the first device 100 without the assistance of the second device 200 once the account information is requested by the same user afterwards. In this case, the server 1000 may provide the account information to the first device 100 even if the second device 200 is not turned on, and may transmit an alarm message to the second device 200 to inform that the first device 100 has used the account information if the second device 200 is turned on afterwards.

The server 1000 may store various individual information for each user, i.e., corresponding to account information of a user. For example, the server 1000 may collect and store user's content usage pattern, content preferences, program preferences, history of broadcasting channels, viewing time or the like, and provide various services corresponding to such stored information. For example, the server 1000 may recommend contents which may draw attention of a user or other broadcasting channels. The individual information is stored and managed by the server 1000, irrespective of the device logged in by a user. Accordingly, if user information is stored in the server 1000 after a user plays a content or views a broadcasting program through the first device 100, the server 1000 may provide service based on the user information stored for each user even in case a user accesses the server 1000 through the second device 200.

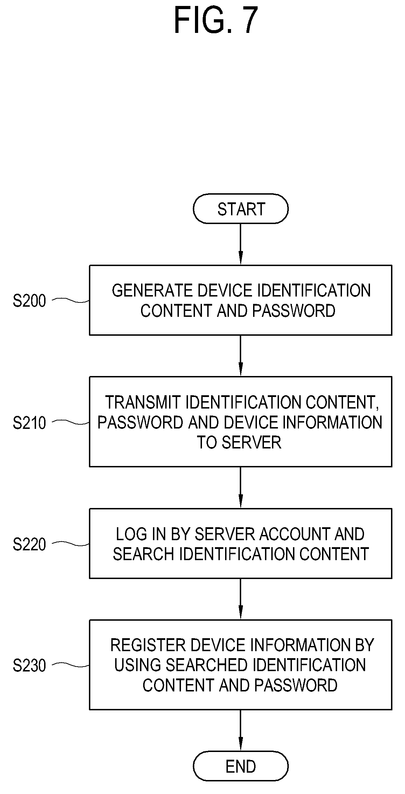

FIG. 7 is a control flowchart of a registration method of the server and the devices. The device information should be provided to the server 1000 for the first device 100 or the second device 200 to communicate with the server 1000. If a user purchases an electronic device such as a TV, he/she may register the device with a server of a manufacturer of the electronic device or a relevant service provider.

A user accesses the server and inputs the device information, which typically includes long characters such as model name, model code, authentication number, manufacturing number or the like. As the registration process is difficult and complicated, a user may give up registering the device with the server.

To improve degree of utilization of the device and provide various services more easily, the server 1000 and the devices 100 and 200 according to an exemplary embodiment generate a device identification content. The device includes the first device 100 as an example. This will be described with reference to FIGS. 7 to 9.

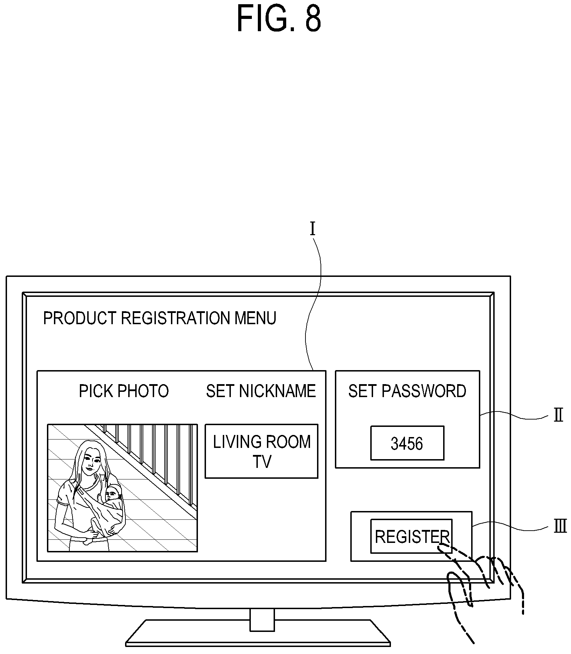

The device identification content and the password are generated as in FIG. 8 (S200). FIG. 8 illustrates a user interface (UI) which is used to generate the device identification content and is displayed in the first device 100. A user generates an inherent identification content I to identify the first device 100. The identification content I may include a still image, a video, a text, an audio signal or the like. The identification content I includes a still image such as a photo and a nickname for the first device 100. A user also generates a password II together with the identification content I. The password II may include a character, a number or both a character and a number depending on the degree of security, and the length of the password II may change.

If a user selects a registration item III to transmit the identification content I of the device to the server 1000, the identification content I, the password II and the device information on the first device 100 are transmitted to the server 1000 (S210). The device information is inherent information stored in the first device 100, and transmitted to the server 1000 together with the identification content I and the password II.

After logging in to the server 1000, a user searches the identification content I for the first device 100 transmitted to the server 1000 (S220).

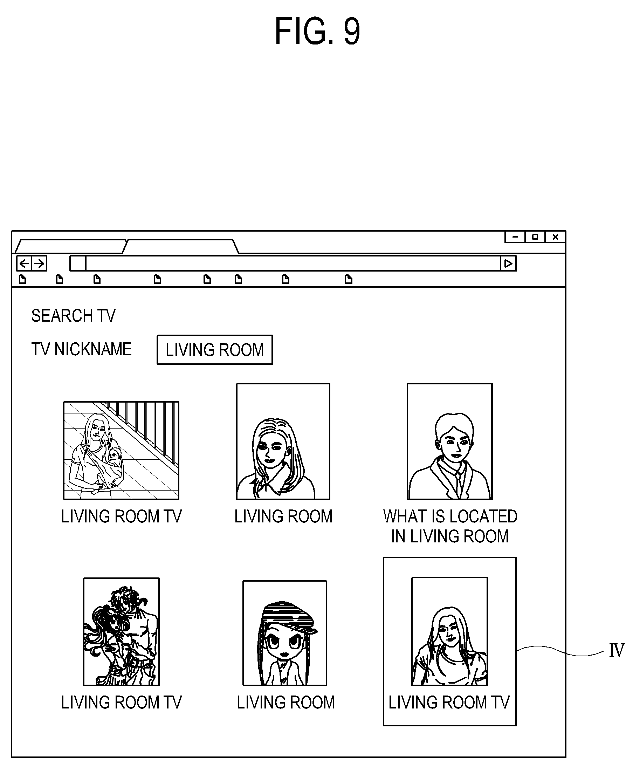

FIG. 9 illustrates a UI which is used to explain searching the identification content I. If a user inputs the nickname, the server 1000 may display a still image including the input nickname or relating to the nickname. A focus IV such as a highlight or a frame may highlight the still image, and can be move according to a user's selection.

A user selects the identification content I transmitted by him/her and registers the device information by using the password (S230). The server 1000 stores the device information transmitted together with the identification content I if the
identification content I selected by a user corresponds to the password II input by a user. Then, the device information is registered, and the server 1000 may provide a user with an event or information relating to the device corresponding to the device information.

As described above, a server for single sign on, a device accessing the server and a control method thereof according to an exemplary embodiment may share account information for a content provider.

Also, a server for single sign on, a device accessing the server and a control method thereof according to another exemplary embodiment may share account information for a content provider by using a storage medium.

Further, a server for single sign on, a device accessing the server and a control method thereof according to another exemplary embodiment may register device information with a server more easily.

Although a few exemplary embodiments have been shown and described, it will be appreciated by those skilled in the art that changes may be made in these exemplary embodiments without departing from the invention, the scope of which is defined in the appended claims.

## Claims

1. A server (1000) for single sign on comprising:
a storage unit (1100) configured to store user information of a plurality of second devices (200);
**characterized in that** it comprises a controller (1200) configured to identify, based on the stored user information, a second device (200) among the plurality of second devices, which is accessed by a same user as a user of a first device (100) and which stores account information, if the first device requests the account information for a content provider, and to provide the first device with the account information stored in the identified second device.

2. The server according to claim 1, wherein the controller is configured to provide the first device with information of the second device.

3. The server according to any one of claims 1 to 2, wherein the controller is configured to request the account information from the second device, and provides the first device with the account information.

4. The server according to any one of claims 1 to 3, wherein the account information received from the second device is encrypted with a PIN code.

5. The server according to any one of claims 1 to 4, wherein the controller is configured to transmit information to the first device indicating that the second device has not been searched if the second device is not searched.

6. A device (100) which accesses a server (1000) for single sign on, the device comprising:
a server communication unit (110) configured to communicate with the server; **characterized in that** it comprises:
a controller (140) configured to control the server communication unit to access the server and request from the server account information for a content provider of a current user , said account information being stored in a second device accessed by the current user
wherein the controller (140) is configured to control the server communication unit to receive from the server the account information stored on the second device (200).

7. The device according to claim 6, wherein the controller is configured to receive the account information encrypted with a PIN code from the server, and is configured to decrypt the account information if the PIN code is input by the current user.

8. A control method of a server (1000) for single sign on, the control method comprising:
storing user information of a plurality of second devices;
the control method **characterized in that** it comprises:
receiving a request signal for account information for a content provider from a connected first device (100);
identifying, based on the stored user information, a second device (200) among a plurality of second devices which is accessed by a same user as a user of the first device and which stores the account information; and
providing the first device with the account information stored in the identified second device.

9. The control method according to claim 8, further comprising providing the first device with the account information on the second device.

10. The control method according to any one of claims 8 to 9, further comprising:
requesting the account information from the second device.

11. A control method of a device (100) which accesses a server (1000) for single sign on, the control method comprising:
accessing the server;
the control method **characterized in that** it comprises:
requesting from the server account information for a content provider of a current user, said account information being stored in a second device accessed by the current user; and
receiving from the server the account information stored on the second device (200).

12. The control method according to claim 11, further comprising receiving encrypted account information with a PIN code from the server;
receiving the PIN code from a user; and
decrypting the encrypted account information based on the received PIN code from the user.

## Patentansprüche

1. Server (1000) für einen Single-Sign-On, der Folgendes umfasst:
eine Speichereinheit (1100), die dafür konfiguriert ist, Benutzerinformationen einer Vielzahl von zweiten Geräten (200) zu speichern; **dadurch gekennzeichnet, dass** sie Folgendes umfasst:
eine Steuerung (1200), die für Folgendes konfiguriert ist: Identifizieren, basierend auf den gespeicherten Benutzerinformationen, eines zweiten Geräts (200) unter der Vielzahl von zweiten Geräten, auf das von dem gleichen Benutzer wie ein Benutzer eines ersten Geräts (100) zugegriffen wird, und das Kontoinformationen speichert, wenn das erste Gerät die Kontoinformationen für einen Inhaltsanbieter anfordert, und Versehen des ersten Geräts mit den Kontoinformationen, die in dem identifizierten zweiten Gerät gespeichert sind.

2. Server nach Anspruch 1, wobei die Steuerung dafür konfiguriert ist, dem ersten Gerät Informationen des zweiten Geräts bereitzustellen.

3. Server nach einem der Ansprüche 1 bis 2, wobei die Steuerung dafür konfiguriert ist, die Kontoinformationen von dem zweiten Gerät anzufordern und die Kontoinformationen dem ersten Gerät bereitzustellen,

4. Server nach einem der Ansprüche 1 bis 3, wobei die Kontoinformationen, die von dem zweiten Gerät empfangen werden, mit einem PIN-Code verschlüsselt sind.

5. Server nach einem der Ansprüche 1 bis 4, wobei die Steuerung dafür konfiguriert ist, Informationen zu dem ersten Gerät zu senden, die anzeigen, dass das zweite Gerät nicht durchsucht wurde, wenn das zweite Gerät nicht durchsucht wird.

6. Gerät (100), das auf einen Server (1000) für einen Single-Sign-On zugreift, wobei das Gerät Folgendes umfasst:
eine Server-Kommunikationseinheit (110), die dafür konfiguriert ist, mit dem Server zu kommunizieren; **dadurch gekennzeichnet, dass** sie Folgendes umfasst:
eine Steuerung (140), die für Folgendes konfiguriert ist: Steuern der Server-Kommunikationseinheit, damit sie auf den Server zugreift, und Anfordern von Kontoinformationen von dem Server für einen Inhaltsanbieter eines aktuellen Benutzers, wobei die Kontoinformationen in einem zweiten Gerät gespeichert werden, auf das der aktuelle Benutzer zugreift,
wobei die Steuerung (140) dafür konfiguriert ist, die Server-Kommunikationseinheit so zu steuern, dass sie von dem Server die Kontoinformationen empfängt, die auf dem zweiten Gerät (200) gespeichert sind.

7. Gerät nach Anspruch 6, wobei die Steuerung dafür konfiguriert ist, die Kontoinformationen zu empfangen, die mit einem PIN-Code von dem Server verschlüsselt sind, und dafür konfiguriert ist, die Kontoinformationen zu entschlüsseln, wenn der PIN-Code von dem aktuellen Benutzer eingegeben wird.

8. Steuerverfahren eines Servers (1000) für einen Single-Sign-On, wobei das Steuerverfahren Folgendes umfasst:
Speichern von Benutzerinformationen einer Vielzahl von zweiten Geräten; wobei das Steuerverfahren **dadurch gekennzeichnet ist, dass** es Folgendes umfasst:
Empfangen eines Anforderungssignals für Kontoinformationen für einen Inhaltsanbieter von einem verbundenen ersten Gerät (100);
Identifizieren, basierend auf den gespeicherten Benutzerinformationen, eines zweiten Geräts (200) unter einer Vielzahl von zweiten Geräten, auf das von dem gleichen Benutzer wie ein Benutzer des ersten Geräts zugegriffen wird, und das die Kontoinformationen speichert; und
Versehen des ersten Geräts mit den Kontoinformationen, die in dem identifizierten zweiten Gerät gespeichert sind.

9. Steuerverfahren nach Anspruch 8, das ferner das Versehen des ersten Geräts mit den Kontoinformationen des zweiten Geräts umfasst.

10. Steuerverfahren nach einem der Ansprüche 8 bis 9, das ferner Folgendes umfasst:
Anfordern der Kontoinformationen von dem zweiten Gerät.

11. Steuerverfahren eines Geräts (100), das auf einen Server (1000) für einen Single-Sign-On zugreift, wobei das Steuerverfahren Folgendes umfasst:
Zugriff auf den Server;
wobei das Steuerverfahren **dadurch gekennzeichnet ist, dass** es Folgendes umfasst:
Anfordern von Kontoinformationen von dem Server für einen Inhaltsanbieter eines aktuellen Benutzers, wobei die Kontoinformationen in einem zweiten Gerät gespeichert werden, auf das der aktuelle Benutzer zugreift, und
Empfangen der Kontoinformationen von dem Server, die auf dem zweiten Gerät (200) gespeichert sind.

12. Steuerverfahren nach Anspruch 11, das ferner den Empfang von verschlüsselten Kontoinformationen mit einem PIN-Code von dem Server umfasst;
Empfangen des PIN-Codes von einem Benutzer; und Entschlüsseln der verschlüsselten Kontoinformationen basierend auf dem empfangenen PIN-Code von dem Benutzer.

## Revendications

1. Serveur (1000) pour une ouverture de session unique, comprenant :
une unité de stockage (1100) configurée de façon à stocker des informations d'utilisateur d'une pluralité de deuxièmes dispositifs (200) ;
**caractérisé en ce qu'**il comprend :
un contrôleur (1200) configuré de façon à identifier, sur la base des informations d'utilisateur stockées, un deuxième dispositif (200) parmi la pluralité de deuxièmes dispositifs auquel accède un même utilisateur en tant qu'utilisateur d'un premier dispositif (100) et qui stocke des informations de compte, si le premier dispositif demande les informations de compte pour un fournisseur de contenus, et à fournir au premier dispositif les informations de compte stockées dans le deuxième dispositif ayant été identifié.

2. Serveur selon la revendication 1, le contrôleur étant configuré de façon à fournir au premier dispositif des informations du deuxième dispositif.

3. Serveur selon l'une quelconque des revendications 1 à 2, le contrôleur étant configuré de façon à demander les informations de compte auprès du deuxième dispositif, et fournissant au premier dispositif les informations de compte.

4. Serveur selon l'une quelconque des revendications 1 à 3, les informations de compte reçues à partir du deuxième dispositif étant cryptées avec un code PIN.

5. Serveur selon l'une quelconque des revendications 1 à 4, le contrôleur étant configuré de façon à transmettre des informations au premier dispositif indiquant que le deuxième dispositif n'a pas fait l'objet d'une recherche si le deuxième dispositif n'est pas recherché.

6. Dispositif (100) qui accède à un serveur (1000) pour une ouverture de session unique, le dispositif comprenant :
une unité de communication de serveur (110) configurée de façon à communiquer avec le serveur ;
**caractérisé en ce qu'**il comprend :
un contrôleur (140) configuré de façon à contrôler l'unité de communication de serveur afin d'accéder au serveur et à demander auprès du serveur des informations de compte pour un fournisseur de contenus d'un utilisateur actuel, lesdites informations de compte étant stockées dans un deuxième dispositif auquel accède l'utilisateur actuel,
cas dans lequel le contrôleur (140) est configuré de façon à contrôler l'unité de communication de serveur afin de recevoir à partir du serveur les informations de compte stockées sur le deuxième dispositif (200).

7. Dispositif selon la revendication 6, le contrôleur étant configuré de façon à recevoir les informations de compte cryptées avec un code PIN en provenance du serveur, et étant configuré de façon à décrypter les informations de compte si le code PIN est introduit par l'utilisateur actuel.

8. Procédé de contrôle d'un serveur (1000) pour une ouverture de session unique, le procédé de contrôle comprenant l'opération consistant à :
stocker des informations d'utilisateur d'une pluralité de deuxièmes dispositifs ;
le procédé de contrôle étant **caractérisé en ce qu'**il comprend :
la réception d'un signal de demande pour des informations de compte pour un fournisseur de contenus à partir d'un premier dispositif connecté (100) ;
l'identification, sur la base des informations d'utilisateur stockées, d'un deuxième dispositif (200) parmi une pluralité de deuxièmes dispositifs auquel accède un même utilisateur en tant qu'utilisateur du premier dispositif et qui stocke des informations de compte ; et
la fourniture au premier dispositif des informations de compte stockées dans le deuxième dispositif ayant été identifié.

9. Procédé de contrôle selon la revendication 8, comprenant en outre l'opération consistant à fournir au premier dispositif les informations de compte sur le deuxième dispositif.

10. Procédé de contrôle selon l'une quelconque des revendications 8 à 9, comprenant en outre l'opération consistant à :
demander les informations de compte auprès du deuxième dispositif.

11. Procédé de contrôle d'un dispositif (100) qui accède à un serveur (1000) pour une ouverture de session unique, le procédé de contrôle comprenant l'opération consistant à :
accéder au serveur ;
le procédé de contrôle étant **caractérisé en ce qu'**il comprend :
la demande, auprès du serveur, d'informations de compte pour un fournisseur de contenus d'un utilisateur actuel, lesdites informations de compte étant stockées dans un deuxième dispositif auquel accède l'utilisateur actuel ; et
la réception, à partir du serveur, des informations de compte stockées sur le deuxième dispositif (200).

12. Procédé de contrôle selon la revendication 11, comprenant en outre les opérations consistant à recevoir des informations de compte cryptées avec un code PIN en provenance du serveur ;
recevoir le code PIN en provenance d'un utilisateur ; et
décrypter les informations de compte cryptées sur la base du code PIN reçu en provenance de l'utilisateur.
